# EUROPÄISCHE PATENTSCHRIFT

(11) **EP 3 344 517 B1**
(45) Veröffentlichungstag und Bekanntmachung des Hinweises auf die Patenterteilung: **20.11.2019**
(21) Anmeldenummer: 16756636.3
(22) Anmeldetag: 10.08.2016
(51) Int. Cl.: B62D 1/181, B62D 1/19, B62D 1/187

(54) **VERSTELLBARE LENKSÄULE FÜR KRAFTFAHRZEUGE MIT ENERGIEABSORBER FÜR DEN FAHRZEUGCRASH**
DISPLACEABLE STEERING COLUMN FOR VEHICLES WITH ENERGY ABSORBER FOR VEHICLE CRASH
COLONNE DÉPLAÇABLE DE DIRECTION POUR VÉHICULE AVEC ABSORBEUR D'ÉNERGIE POUR COLLISION DE VÉHICULE

(30) Priorität: 01.09.2015 DE 102015216715
(43) Veröffentlichungstag der Anmeldung: 11.07.2018
(73) Patentinhaber: ThyssenKrupp Presta AG, 9492 Eschen (LI); thyssenkrupp AG, 45143 Essen (DE)
(72) Erfinder: ABOU ALAM, Amir, 9000 St. Gallen (CH)
(74) Vertreter: thyssenkrupp Intellectual Property GmbH
(86) Internationale Anmeldenummer: PCT/EP2016/069007
(87) Internationale Veröffentlichungsnummer: WO 2017/036752

(56) Entgegenhaltungen:
- EP-A1- 1 693 279
- EP-A2- 1 464 561
- DE-A1- 3 633 732
- DE-B3-102005 052 123
- US-A1- 2011 162 904

## Beschreibung

Die vorliegende Erfindung betrifft eine verstellbare Kraftfahrzeuglenksäule mit einem Mantelrohr, mit einem in dem Mantelrohr axial verschiebbaren Führungsrohr, mit einer von dem Führungsrohr aufgenommenen sowie um eine Drehachse drehbar gelagerten Lenkspindel, mit einem unter Energieaufnahme umformbar ausgestalteten Energieabsorptionselement zur Absorption von Aufprallenergie bei einem Fahrzeugcrash, wobei das Energieabsorptionselement zwischen dem Führungsrohr und dem Mantelrohr angeordnet ist, mit einem Umformmittel, welches bei dem Fahrzeugcrash zur Umformung des Energieabsorptionselements ausgestaltet ist, und mit einer Verstellvorrichtung, die zur axialen Verstellverschiebung des Führungsrohrs in eine Verstellposition und zur Fixierung des Führungsrohrs in der Verstellposition vorgesehen ist, und die Verstellvorrichtung einen elektromotorischen Aktuator für die Verstellverschiebung und die Fixierung umfasst.

Den allgemeinen Stand der Technik einer derartigen Kraftfahrzeuglenksäule offenbart beispielsweise DE 10 2011 083 190 A1 anhand einer elektrisch verstellbaren Lenksäule, welche seitlich eines Mantelrohrs angeordnet ist und ein Crashelement umfasst. Das Crashelement ist hierbei als U-förmiger Blechstreifen ausgebildet, in welchem ein Biegedraht aufgenommen ist.

Ferner offenbart auch beispielsweise US 8 899 622 B2 den allgemeinen Stand der Technik bezüglicher einer Lenksäule mit einer Crashvorrichtung, welche am inneren Mantelrohr und am äußeren Mantelrohr angebracht ist. Zur Energieabsorption im Falle eines Crashs werden hierbei zwei nebeneinander positionierte Biegestreifen verwendet.

Aus der EP 1 693 279 A1 ist eine gattungsbildende motorisch verstellbare Lenksäule bekannt, die eine Energieabsorptionsvorrichtung mit Losbrech- und Reibelementen aufweist.

Ein Nachteil dervorgenannten Lösungen ist der mit ihnen verbundene hohe Bauraumbedarf und der konstruktiv aufwendige Aufbau.

Aufgabe der Erfindung ist es daher, eine verbesserte Energieabsorption für eine Kraftfahrzeuglenksäule im Crashfall bereitzustellen, wobei die Herstellkosten reduziert sind.

Die Erfindung löst die Aufgabe dadurch, dass die das Energieabsorptionselement einen mit einer Längsseite parallel zur Drehachse angeordneten Langloch aufweist, und das Umformmittel ist als Zapfen ausgestaltet, der in dem Langloch in einer Ausgangsposition angeordnet ist, und bei einer durch den Fahrzeugcrash verursachten Aufprallverschiebung des Führungsrohrs erfolgt eine Relativbewegung zwischen dem Zapfen und dem Langloch, wobei das Langloch während der Relativbewegung unter Energieabsorption aufgeweitet wird.

Erfindungsgemäß kann beispielsweise ein Blech mit einem Langloch vorgesehen sein, in dessen Langloch ein zylindrischer Zapfen eingreift.Die beim Aufprall auftretende teleskopartige Bewegung zwischen Mantelrohr und Führungsrohr überträgt sich erfindungsgemäß auf den genannten Zapfen und das Blech, sodass der Zapfen das Langloch aufweitet, wodurch es zueiner plastischen Verformung des Blechs am Rande des Langlochs kommt.

Zur Aufnahme des Zapfens im Langloch kann eine besondere Form des Langlochs vorgesehen sein, so dass der Zapfen eine Kraft auf das Energieabsorptionselement übertragen kann. Erst bei Überschreiten eines vordefinierten Wertes der Kraft, erfolgt die Verschiebung des Zapfens im Langloch.

Bei einer weiteren vorteilhaften Ausgestaltung der erfindungsgemäßen Kraftfahrzeuglenksäule ist das Langloch an einer der Ausgangsposition entgegensetzen Seite offen. Dies ermöglicht es, dass beim Überschreiten eines durch das Langloch vorgegebenen Retraktionswegs des Führungsrohrs, eine zusätzliche weitere Verschiebung der Kraftfahrzeuglenksäule in Fahrtrichtung ermöglicht ist.

Weiterhin kann die Kraftfahrzeuglenksäule vorzugsweise so ausgestaltet sein, dass das Umformmittel mit dem Führungsrohr und das Energieabsorptionselement mit der Verstellvorrichtung verbunden ist. Dadurch wird die Gestaltung des Energieabsorptionssystems weiter vereinfacht und die Herstellung vereinfacht.

In einer bevorzugten Ausgestaltung der erfindungsgemäßen Kraftfahrzeuglenksäule ist das Energieabsorptionselement mit der Verstellvorrichtung verschraubt. Dadurch wird vorteilhaft eine lösbare Verbindung bereitgestellt, indem für jeweils unterschiedliche Aufprallszenarien passende Energieabsorptionselemente montiert werden können.

Es ist weiter zu bevorzugen, das Energieabsorptionselement als ein Mitnehmer zur Übertragung der Verstellverschiebung darzustellen. Dadurch kann die Anzahl der Bauteile reduziert werden.

Bei einer weiteren vorteilhaften Ausgestaltung der Erfindung ist das Energieabsorptionselement als ein Blechumformteil ausgebildet. Diese Maßnahme ermöglicht es, dass das Energieabsorptionselement beispielsweise als ein Profilblech ausgestaltet ist. Insbesondere kann das Profilblech als einstückiges integral aus einem einzigen Bauteil bestehendes Stanzbiegeteil dargestellt sein. Zusätzlich kann auch eine hinsichtlich einer für das Energieabsorptionsverhalten gewünschten optimierten Gleitreibung günstige Beschichtung auf das Profilblech aufgebracht werden.

Bei einer weiteren vorteilhaften Ausgestaltung der Erfindung weist das Führungsrohr eine Halterung für das Umformmittel auf. Eine solche Halterung kann beispielsweise aus einer Nut in dem Führungsrohr bestehen, in der das Umformmittel formschlüssig aufgenommen ist. Vorteilhaft ist hieran, dass das Umformmittel leicht montiert werden kann.

Mit Vorteil kann das Umformmittel aus gesintertem Material bestehen. Dadurch kann eine gewünschte Form einfach dargestellt werden. Beispielweise können Führungskanten für die Führung des Umformmittels im Langloch während des Crashs eingebracht sein.

In vorteilhafter Weiterbildung der Erfindung weist das Umformmittel eine längliche Form mit konvexen Außenflächen auf, die an inneren Begrenzungsflächen des Langlochs anliegen. Dadurch wird ein Verkanten des Umformmittels während der Verformung des Energieabsorptionselements mit Vorteil vermieden. So kann das Umformmittel beispielsweise in einer ovalen Form ausgebildet sein oder zumindest im Längsschnitt ein ovales Profil aufweisen. Mit Vorteil kann die erfindungsgemäße Kraftfahrzeuglenksäule einen elektromotorischen Aktuator für die Verstellverschiebung und die Fixierung umfassen. Für den Bedienkomfort der erfindungsgemäßen Kraftfahrzeuglenksäule kann beispielsweise ein Elektromotor über ein Getriebe mit Antriebsspindel das Führungsrohr in eine von einem Fahrzeugführer gewünschte Position axial verschieben. Dabei erfolgt die Fixierung dadurch, dass die Rotation der Antriebsspindel gestoppt wird und dadurch das Führungsrohr in einer definierten Position in axialer Richtung relativ zum Mantelrohr gehalten wird.

Ausführungsbeispiele der Erfindung werden nachfolgend anhand von Zeichnungen näher erläutert. Die Figuren zeigen im Einzelnen:
Die Figuren der Zeichnung zeigen im Einzelnen:
- Figur 1:: eine erfindungsgemäße Kraftfahrzeuglenksäule in perspektivischer Darstellung;
- Figur 2:: die Kraftfahrzeuglenksäule aus Figur 1, mit demontierter Abdeckung;
- Figur 3:: die Kraftfahrzeuglenksäule aus Figur 1 in teilweiser Explosionsdarstellung ohne Konsole;
- Figur 4:: die Kraftfahrzeuglenksäule aus Figur 1 gemäß der Darstellungsweise aus Figur 3, jedoch in anderer perspektivischer Ansicht;
- Figur 5:: das Führungsrohr der erfindungsgemäßen Kraftfahrzeuglenksäule aus Figur 1 in perspektivischer Darstellung;
- Figur 6:: das Führungsrohr der erfindungsgemäßen Kraftfahrzeuglenksäule aus Figur 5 in teilweiser Explosionsdarstellung;
- Figur 7:: eine Detaildarstellung des Energieabsorptionselements aus Figur 1 bis 6 in perspektivischer Ansicht; und
- Figur 8:: eine weitere Ausführungsform des Energieabsorptionselements in perspektivischer Ansicht.

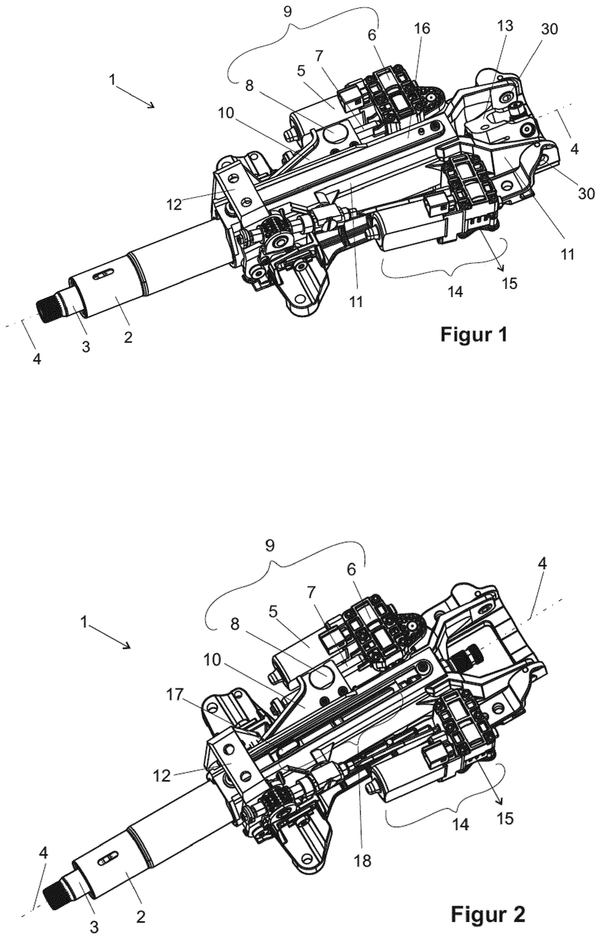

Die in den Figuren 1 bis 4 dargestellte Kraftfahrzeuglenksäule 1 weist ein Führungsrohr 2 auf, in dem eine Lenkspindel 3 drehbar um eine Drehachse 4 gelagert ist. Die dargestellte Lenksäule ist mit einer axialen Verstellvorrichtung 9 in ihrer Längsposition gegenüber einer karosseriefesten Konsole 12 einstellbar. Hierzu ist im Beispiel ein elektromotorischem Aktuator, bestehend aus einem Elektromotor 5 und einem Getriebe 6 vorgesehen und einem nicht dargestellten elektrischen Schaltmechanismus. Die Verstellvorrichtung ist über die Konsole 12 mit dem Fahrzeug verbunden. Mit dem Schaltmechanismus kann die Verstellvorrichtung 9 wahlweise zwischen den Zuständen: Verstellung oder Halten der Lenksäule hin und her geschaltet werden. Der Abtrieb des Elektromotors 5 ist mit dem Getriebe 6 verbunden. Das Getriebe 6 wandelt die im Zustand Verstellung vom Elektromotor 5 erzeugte Drehbewegung über eine Spindel 7 in eine axiale Bewegung eines Schlittens 8 in eine Verschieberichtung um. Entsprechend bilden der Elektromotor 5, das Getriebe 6, die Spindel 7 und der Schlitten 8 die axiale Verstellvorrichtung 9 der Kraftfahrzeuglenksäule 1. Der Schlitten 8 ist in Verschieberichtung mit einem Halteblech 10 verbunden. Im Zustand Verstellung verschiebt die Verstellvorrichtung das Halteblech 10 in die Verschieberichtung, parallel zur Drehachse 4. Das Halteblech 10 ist über einen Zapfen 17, der in einem Langloch 18 angeordnet ist, mit dem Führungsrohr 2 verbunden. Dadurch wird, im Zustand Verstellung, eine Verschiebung des Halteblechs 10 direkt auf das Führungsrohr übertragen.

Im dargestellten Beispiel ist die Lenksäule zusätzlich auch in ihrer Höhe oder Neigung verstellbar. Hierzu ist ein Mantelrohr 11 vorgesehen, das über ein Drehgelenk 30 mit der Konsole 12 verbunden ist. Mit einer weiteren Winkel-Verstellvorrichtung 14, bestehend aus einem weiteren Elektromotor und einem weiteren Getriebe ist das Mantelrohr 11, zusammen mit dem Führungsrohr 2 und der darin gelagerten Lenkspindel 3 gegenüber der Konsole 12 im Gelenk 30 verschwenkbar. Zur Darstellung der Verschwenkbarkeit der Lenksäule ist ein Kreuzgelenk 13 vorgesehen.

Der Übergang von dem Halteblech 10 zum Führungsrohr 2 wird in Figur 1 durch eine Abdeckung 16 verdeckt. Im Zustand Halten wird mit Hilfe derVerstellvorrichtung 9 das Halteblech 10 und damit auch das Führungsrohr fixiert.Das Kraftfahrzeug wird in diesem fixierten Zustand betriebsmäßig genutzt.

Im Falle eines Fahrzeugcrashs, bei dem sich die Verstellvorrichtung im Zustand Halten befindet, wirkt auf das Halteblech 10 gegenüber dem Führungsrohr 2 eine Kraft in Verschieberichtung
Figur 2 zeigt die Kraftfahrzeuglenksäule 1 aus Figur 1 mit der demontierten Abdeckung 16, welche in Figur 1 zu sehen ist. Aus Figur 2 wird ersichtlich, dass das Führungsrohr 2 ein Verbindungsstück in Form eines Zapfens 17 aufweist. Der Zapfen 17 ist in ein Langloch 18 des Halteblechs 10 eingeklemmt, sodass eine Verschiebung des Halteblechs 10 zu einer axialen Verschiebung des Führungsrohrs 2 gegenüber dem Mantelrohr 11 führt. Im Falle eines durch einen Fahrzeugunfall verursachten Aufpralls eines Fahrers auf die Kraftfahrzeuglenksäule 1 erfolgt nach Überschreiten einer vordefinierten Kraft eine Verschiebung des Zapfens gegenüber dem Halteblech 10, wobei der Zapfen das Langloch 18 ,dessen Breite größer ausgeformt ist als die Breite des Zapfens 17, aufweitet. Hierdurch wird die Aufprallenergie des Fahrers durch Umformung des Halteblechs 10, beziehungsweise insbesondere der Ränder des Langlochs 18, absorbiert. In diesem Sinne ist das Halteblech 10 als Energieabsorptionselement 10 zu verstehen und wird in der Beschreibung der Ausführungsbeispiele synonym verwendet.

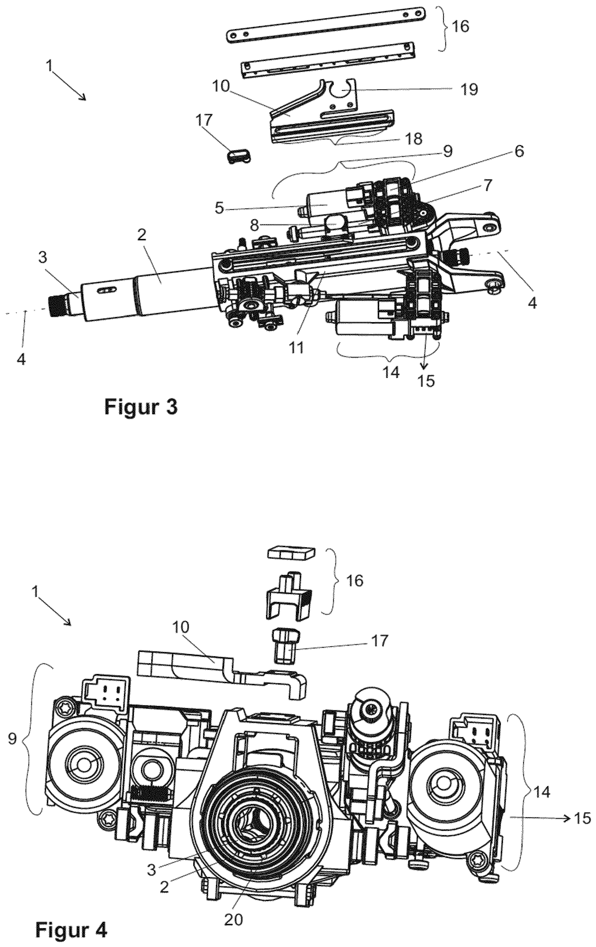

Der Figur 3 ist die Kraftfahrzeuglenksäule 1 aus Figur 1 in teilweiser Explosionsdarstellung ohne Darstellung der Konsole 12 aus Figur 1 zu entnehmen. Das Halteblech 10 weist in Figur 3 eine Ausnehmung 19 für den Schlitten 8 auf. Das Verbindungsstück 17 wird in das Führungsrohr 2 eingesetzt.

Figur 4 zeigt die Kraftfahrzeuglenksäule aus Figur 1 gemäß der Darstellungsweise aus Figur 3 in perspektivischer Ansicht entlang der Drehachse 4 aus den Figuren 1 bis 3. Figur 4 ist zu entnehmen, dass die Lenkspindel 3 mithilfe eines Wälzlagers in dem Führungsrohr 2 drehbar gelagert ist.

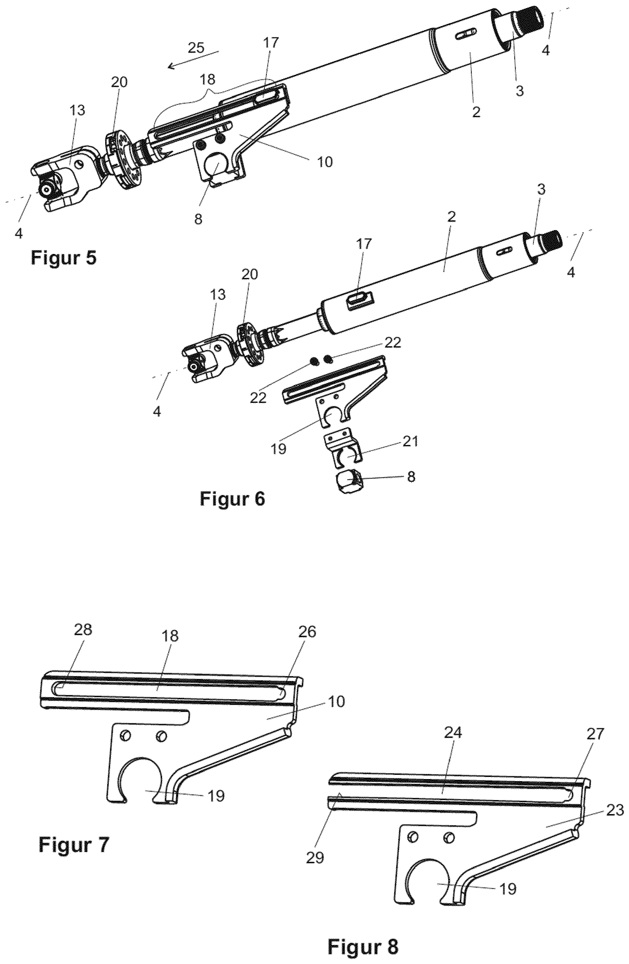

Die Figuren 5 und 6 zeigen das Führungsrohr 2 der Kraftfahrzeuglenksäule 1 aus der Figur 1 in perspektivischer Darstellung in auseinandergezogener Form. Das Halteblech 10 ist gemäß den Figuren 5 und 6 mit dem Schlitten 8 über ein Winkelprofil 21, welches mit Schrauben 22 an dem Halteblech 10 befestigt ist, formschlüssig mit Hilfe der Ausnehmung 19 verbunden. Im Falle eines Crashs weitet das mit dem Führungsrohr 2 verbundene Verbindungsstück 17 das Langloch18 des Halteblechs 10 quer zu seiner Bewegungsrichtung 25 auf, was zur Absorption von Energie führt. Außerdem ist den Figuren 5 und 6 eine Wälzlagerung 20 für die Lenkspindel 3 zu entnehmen.

Figur 7 zeigt eine Detaildarstellung des Halteblechs 10 aus Figur 1 bis 6 in perspektivischer Ansicht. Der Zapfen 17 der Figuren 1 bis 6 befindet sich vor einem Crash in einer Ausgangsposition 26. Das Langloch18 weist innere Begrenzungsflächen 28, an denen der Zapfen 17 aus den Figuren 1 bis 6 anliegen kann.

Figur 8 zeigt ein Halteblech 23 in einer weiteren Ausführungsform mit einem einseitig offenen Langloch 24 in perspektivischer Ansicht. Analog zu dem Halteblech 10 der Kraftfahrzeuglenksäule 1 der Figuren 1 bis 6 absorbiert das Halteblech 23 (oder synonym im Sinne der Erfindung Energieabsorptionselement 23) Aufprallenergie, indem ein mit einem Führungsrohr verbundenes Verbindungsstück den Langloch 24 ausgehend von einer Ausgangsposition 27 des Halteblechs 23 aufweitet. Das offene Ende des Langlochs 24 ermöglicht, dass der Zapfen beim Überschreiten einer vorbestimmten Absorptionsenergie auch aus dem Langloch 24 herausgleiten kann, wodurch noch eine zusätzliche Verschiebung der Lenksäule im Crashfall ermöglicht wird. Analog zu dem Langloch 18 des Halteblechs 10 aus Figur 7 weist auch das Langloch 24 des Halteblech 23 innere Begrenzungsflächen 29 auf, an denen der Zapfen 17 aus den Figuren 1 bis 6 anliegt

### BEZUGSZEICHENLISTE

- 1: Kraftfahrzeuglenksäule
- 2: Führungsrohr
- 3: Lenkspindel
- 4: Drehachse
- 5: Elektromotor
- 6: Getriebe
- 7: Spindel
- 8: Schlitten
- 9: Verstellvorrichtung
- 10: Halteblech
- 11: Mantelrohr
- 12: Konsole
- 13: Kreuzgelenk
- 14: Winkel-Verstellvorrichtung
- 15: Drehachse
- 16: Abdeckung
- 17: Zapfen
- 18: Langloch
- 19: Ausnehmung
- 20: Wälzlager
- 21: Winkelprofil
- 22: Schrauben
- 23: Halteblech
- 24: Langloch
- 25: Bewegungsrichtung
- 26: Ausgangsposition
- 27: Ausgangsposition
- 28: Begrenzungsfläche
- 29: Begrenzungsfläche
- 30: Drehgelenk

## Patentansprüche

1. Verstellbare Kraftfahrzeuglenksäule (1) mit einem Mantelrohr (11), mit einem in dem Mantelrohr (11) axial verschiebbaren Führungsrohr (2), mit einer von dem Führungsrohr (2) aufgenommenen sowie um eine Drehachse (4) drehbar gelagerten Lenkspindel (3), mit einem unter Energieaufnahme umformbar ausgestalteten Energieabsorptionselement (10, 23) zur Absorption von Aufprallenergie bei einem Fahrzeugcrash, wobei das Energieabsorptionselement (10, 23) zwischen dem Führungsrohr (2) und dem Mantelrohr (11) angeordnet ist, mit einem Umformmittel (17), welches bei dem Fahrzeugcrash zur Umformung des Energieabsorptionselements (10, 23) ausgestaltet ist, und mit einer Verstellvorrichtung (9), die zur axialen Verstellverschiebung des Führungsrohrs (2) in eine Verstellposition und zur Fixierung des Führungsrohrs (2) in der Verstellposition vorgesehen ist, und die Verstellvorrichtung (9) einen elektromotorischen Aktuator (5, 6) für die Verstellverschiebung und die Fixierung umfasst, **dadurch gekennzeichnet, dass** das Energieabsorptionselement (10, 23) ein mit einer Längsseite parallel zur Drehachse (4) angeordneten Langloch (18, 24) aufweist, und dass das Umformmittel als Zapfen (17) ausgestaltet ist, der in dem Langloch (18, 24) in einer Ausgangsposition (26, 27) angeordnet ist, dass bei einer durch den Fahrzeugcrash verursachten Aufprallverschiebung des Führungsrohrs (2) eine Relativbewegung zwischen dem Zapfen (17) und dem Langloch (18, 24) erfolgt, wobei das Langloch (18, 24) während der Relativbewegung unter Energieabsorption aufgeweitet wird.

2. Kraftfahrzeuglenksäule (1) nach Anspruch 1, **dadurch gekennzeichnet, dass** das Langloch (18, 24) an einer der Ausgangsposition (26, 27) entgegensetzen Seite offen ist.

3. Kraftfahrzeuglenksäule (1) nach einem der vorhergehenden Ansprüche, **dadurch gekennzeichnet, dass** das Umformmittel (17) mit dem Führungsrohr (2) und das Energieabsorptionselement (10, 23) mit der Verstellvorrichtung (9) verbunden ist.

4. Kraftfahrzeuglenksäule (1) nach Anspruch 3, **dadurch gekennzeichnet, dass** das Energieabsorptionselement (10, 23) mit der Verstellvorrichtung (9) verschraubt ist.

5. Kraftfahrzeuglenksäule (1) nach einem der vorhergehenden Ansprüche, **dadurch gekennzeichnet, dass** das Energieabsorptionselement (10, 23) als ein Mitnehmer zur Übertragung der Verstellverschiebung ausgebildet ist.

6. Kraftfahrzeuglenksäule (1) nach einem der vorhergehenden Ansprüche, **dadurch gekennzeichnet, dass** das Energieabsorptionselement (10, 23) als ein Blechumformteil ausgebildet ist.

7. Kraftfahrzeuglenksäule (1) nach Anspruch 5 oder 6, **dadurch gekennzeichnet, dass** das Blechumformteil und der Mitnehmer einstückig ausgebildet sind.

8. Kraftfahrzeuglenksäule (1) nach einem der vorhergehenden Ansprüche, **dadurch gekennzeichnet, dass** das Führungsrohr (2) eine Halterung für das Umformmittel (17) aufweist.

9. Kraftfahrzeuglenksäule (1) nach einem der vorhergehenden Ansprüche, **dadurch gekennzeichnet, dass** das Umformmittel (17) aus gesintertem Material besteht.

10. Kraftfahrzeuglenksäule (1) nach einem der vorhergehenden Ansprüche, **dadurch gekennzeichnet, dass** Umformmittel (17) eine längliche Form mit konvexen Außenflächen aufweist, die an inneren Begrenzungsflächen (28, 29) des Langlochs (18, 24) anliegen.

## Claims

1. Adjustable motor vehicle steering column (1) with a casing tube (11); with a guide tube (2) which can be moved axially in the casing tube (11); with a steering spindle (3) which is received by the guide tube (2) and is rotatably mounted about a rotational axis (4); with an energy absorption element (10, 23), which is configured so as to deform on absorption of energy, for absorbing impact energy during a vehicle crash, wherein said energy absorption element (10, 23) is arranged between the guide tube (2) and the casing tube (11); with a deformation means (17) which is designed to deform the energy absorption element (10, 23) during the vehicle crash; and with an adjustment device (9) which is provided to axially move the guide tube (2) into an adjustment position and to fix the guide tube (2) in the adjustment position, and the adjustment device (9) comprises an electromotor-powered actuator (5, 6) for the adjustment movement and the fixing, **characterized in that** the energy absorption element (10, 23) has a slot (18, 24) arranged with a long side parallel to the rotation axis (4), and that the deformation means is configured as a peg (17) which is arranged in the slot (18, 24) in a starting position (26, 27), and that on a collision-induced shift of the guide tube (2) caused by the vehicle crash, a relative movement occurs between the peg (17) and the slot (18, 24), wherein the slot (18, 24) is widened during the relative movement while absorbing energy.

2. Motor vehicle steering column (1) according to Claim 1, **characterized in that** the slot (18, 24) is open on a side opposite the starting position (26, 27).

3. Motor vehicle steering column (1) according to any of the preceding claims, **characterized in that** the deformation means (17) is connected to the guide tube (2), and the energy absorption element (10, 23) is connected to the adjustment device (9).

4. Motor vehicle steering column (1) according to Claim 3, **characterized in that** the energy absorption element (10, 23) is bolted to the adjustment device (9).

5. Motor vehicle steering column (1) according to any of the preceding claims, **characterized in that** the energy absorption element (10, 23) is formed as a carrier for transmitting the adjustment movement.

6. Motor vehicle steering column (1) according to any of the preceding claims, **characterized in that** the energy absorption element (10, 23) is formed as a sheet-formed part.

7. Motor vehicle steering column (1) according to Claim 5 or 6, **characterized in that** the sheet-formed part and the carrier are configured as one piece.

8. Motor vehicle steering column (1) according to any of the preceding claims, **characterized in that** the guide tube (2) comprises a holder for the deformation means (17).

9. Motor vehicle steering column (1) according to any of the preceding claims, **characterized in that** the deformation means (17) comprises sintered material.

10. Motor vehicle steering column (1) according to any of the preceding claims, **characterized in that** the deformation means (17) has an elongate form with convex outer faces which lie against inner delimitation faces (28, 29) of the slot (18, 24).

## Revendications

1. Colonne de direction de véhicule automobile réglable (1) comprenant un tube de colonne de direction (11), un tube de guidage (2) pouvant coulisser axialement dans le tube de colonne de direction (11), un arbre de direction (3) reçu par le tube de guidage (2) et monté à rotation sur un axe de rotation (4), un élément d'absorption d'énergie (10, 23) conçu pour pouvoir se déformer en cas d'absorption d'énergie et destiné à absorber l'énergie d'impact lors d'un accident de véhicule, l'élément d'absorption d'énergie (10, 23) étant disposé entre le tube de guidage (2) et le tube de colonne de direction (11), un moyen de déformation (17) qui est conçu pour déformer l'élément d'absorption d'énergie (10, 23) lors d'un accident de véhicule, et un dispositif de réglage (9) qui est destiné à régler le coulissement axial du tube de guidage (2) dans une position de réglage et à fixer le tube de guidage (2) dans la position de réglage, et le dispositif de réglage (9) comportant un actionneur électromoteur (5, 6) destiné au coulissement de réglage et à la fixation, **caractérisée en ce que** l'élément d'absorption d'énergie (10, 23) comporte un trou longitudinal (18, 24) qui est disposé avec un côté longitudinal parallèle à l'axe de rotation (4) et **en ce que** le moyen de déformation est conçu sous la forme d'une broche (17) qui est disposée dans le trou longitudinal (18, 24) dans une position initiale (26, 27) de manière à produire un mouvement relatif entre la broche (17) et le trou longitudinal (18, 24) lors d'un coulissement d'impact du tube de guidage (2) provoqué par l'accident de véhicule, le trou longitudinal (18, 24) étant élargi par l'absorption d'énergie pendant le mouvement relatif.

2. Colonne de direction de véhicule automobile (1) selon la revendication 1, **caractérisée en ce que** le trou longitudinal (18, 24) est ouvert sur un côté opposé à la position initiale (26, 27).

3. Colonne de direction de véhicule automobile (1) selon l'une des revendications précédentes, **caractérisée en ce que** le moyen de déformation (17) est relié au tube de guidage (2) et l'élément d'absorption d'énergie (10, 23) est relié au dispositif de réglage (9).

4. Colonne de direction de véhicule automobile (1) selon la revendication 3, **caractérisée en ce que** l'élément d'absorption d'énergie (10, 23) est vissé au dispositif de réglage (9).

5. Colonne de direction de véhicule automobile (1) selon l'une des revendications précédentes, **caractérisée en ce que** l'élément d'absorption d'énergie (10, 23) est conçu comme un entraîneur destiné à transmettre le coulissement de réglage.

6. Colonne de direction de véhicule automobile (1) selon l'une des revendications précédentes, **caractérisée en ce que** l'élément d'absorption d'énergie (10, 23) est conçu comme un élément de déformation de tôle.

7. Colonne de direction de véhicule automobile (1) selon la revendication 5 ou 6, **caractérisée en ce que** l'élément de déformation de tôle et l'entraîneur sont conçus d'une seule pièce.

8. Colonne de direction de véhicule automobile (1) selon l'une des revendications précédentes, **caractérisée en ce que** le tube de guidage (2) comporte un support destiné au moyen de déformation (17).

9. Colonne de direction de véhicule automobile (1) selon l'une des revendications précédentes, **caractérisée en ce que** le moyen de déformation (17) est en une matière frittée.

10. Colonne de direction de véhicule automobile (1) selon l'une des revendications précédentes, **caractérisée en ce que** le moyen de déformation (17) a une forme allongée pourvue de des surfaces extérieures convexes qui viennent en appui contre les surfaces de limitation intérieures (28, 29) du trou longitudinal (18, 24).
